# EUROPEAN PATENT APPLICATION

(11) **EP 3 062 302 A1**
(43) Date of publication of application: **31.08.2016**
(21) Application number: 16156008.1
(22) Date of filing: 16.02.2016
(51) Int. Cl.: G08G 5/00, G05D 1/06, G08G 5/02

(54) **SYSTEM AND METHODS FOR PROVIDING SITUATIONAL AWARENESS INFORMATION FOR A RELATIVE NAVIGATION SYSTEM**

(30) Priority: 27.02.2015 US 201514633262
(71) Applicant: GE Aviation Systems LLC, Grand Rapids, MI 49512-1991 (US)
(72) Inventor: FELDMANN, Michael Steven, Grand Rapids, MI Michigan 49512-1991 (US); COUTTS, Benjamin Ivan, Grand Rapids, MI Michigan 49512-1991 (US); BOOZER, Ralph Demmon, Grand Rapids, MI Michigan 49512-1991 (US)
(74) Representative: Williams, Andrew Richard

(57) **Abstract**

System and methods (100) for providing situational awareness information to an aircrew of an aircraft (18) including projecting (102) into space, from a grid generator (10) at the landing zone (40), a set of lines defining a relative navigation grid and encoded with grid data and configured to identify predetermined points on the relative navigation grid that provide situational awareness, detecting (104), with a detector module (16) on the aircraft, a location of the aircraft within the grid and generating (106) and displaying (108) situational awareness information based on detected location.

## Description

### BACKGROUND

Relative navigation systems are useful for various applications such as autonomous vehicle navigation such as in a warehouse or factory environment, mid-air refueling, and space docking. In some applications, only the 3-dimensional position (Px, Py, Pz, or Azimuth, Elevation, Slant Range) between two objects is required. In other applications, the relative range, as well as the relative velocity (Vx, Vy, Vz, or Azimuth Rate, Elevation Rate, Slant Range Rate) and the relative attitudes (pitch, roll, and yaw) between two objects are required. Relative navigation systems can be particularly useful when an aircraft is being landed on a moving structure, such as a ship, vehicle, or oil platform because conventional landing aids require significant infrastructure and are intended to be used on stationary structures and do not compensate for movement of the vehicle or structure on which the aircraft is landing. In some situations it can be hard to navigate an aircraft where there are no conventional landing aids such as runway lights, etc.

### BRIEF DESCRIPTION

In one aspect, an embodiment of the invention relates to a method of providing situational awareness information to aircrew including projecting into space from a grid generator a set of lines defining a relative navigation grid and encoded with grid data configured to identify predetermined points on the relative navigation grid, detecting, with at least one detector module on the aircraft, a location of the aircraft within the grid, generating situational awareness information, including at least one of guidance or deviation information to at least one waypoint for a landing approach, based on the detected location and displaying, on a display of the aircraft, the generated situational awareness information.

In another aspect, an embodiment of the invention relates to a situational awareness system including a grid generator configured to project into space a set of lines defining a relative navigation grid, at least one detector module configured to generate a sensor output based on a location of the detector module in the relative navigation grid, a display located at least one of within a cockpit of an aircraft, or on a remotely located display system and a processor configured to receive the sensor output, determine a location of the aircraft within the grid, generate situational awareness information to at least one waypoint for a landing approach based on the determined location and display the generated situational awareness information.

### BRIEF DESCRIPTION OF THE DRAWINGS

In the drawings:
FIG. 1 is a perspective view of a helicopter and a grid generator according to an embodiment of the invention.
FIG. 2 is a schematic view of the grid generator of FIG. 1 mounted on an oil platform and the helicopter of FIG. 1.
FIG. 3 is a flow chart of a method of displaying situational awareness information.
FIG. 4 is a schematic view of situational awareness information that can be displayed on a display of the helicopter of FIG. 2.
FIG. 5 is a schematic view of two grid projections that can be formed by the grid generator of FIG. 2 when the oil platform is moving.
FIG. 6 is a schematic view of the two grid projections of FIG. 5 with altered grid data.

### DETAILED DESCRIPTION

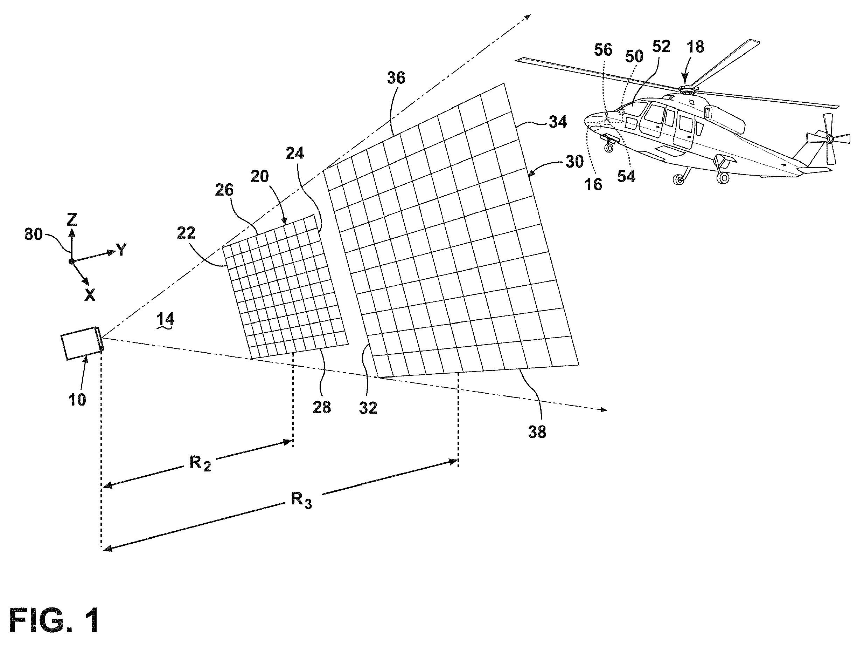

The embodiments of the present invention are related to methods and apparatus for providing situational awareness and guidance information to aircrew of an aircraft, which can be used for any type of aircraft. FIG. 1 illustrates an embodiment of a grid generator 10 that can project a grid, such as a set of intersecting lines, into space within a field of regard (FOR) 14. More specifically, the grid generator 10 repeatedly projects the grid into three dimensional space to define a FOR 14 bounded by the grid. It will be understood that repeatedly projecting can include projecting sets of lines at predetermined time intervals, projecting sets of lines randomly, and projecting sets of lines in any suitable manner such that the FOR 14 is defined and can be utilized in a relative navigation system. The general details of how to project the grid are known in the art, which include the disclosure in US 7,681,839, issued March 23, 2010, entitled Optical Tracking System For Refueling, and U.S. Patent No. 8,386,096, issued February 26, 2013, entitled Relative Navigation System, both of which are incorporated by reference. Therefore, the general details of the grid generation will not be fully described in this application.

As illustrated, the projected grid includes intersecting lines. At some distance away from the grid generator 10, these intersecting lines are observed as a grid in space, with the size of the grid increasing away from the grid generator 10. The grid in space generated by the grid generator 10 can be detected by a detector module 16 of a moveable object, which can then maneuver itself based upon the detected grid. For purposes of this discussion, the moveable object will be described as a helicopter 18 having the detector module 16. For relative navigation between the grid generator 10 and the helicopter 18 it is presumed that the detector module 16 of the helicopter 18 lies within the field of transmission of the grid generator 10, enabling the detector module 16 to "see" the grid.

For description purposes, the grid generator 10 can be thought of as projecting intersecting lines substantially in the y direction of the coordinate system. If one were to observe the projection of intersecting lines in the x-z plane at some distance R₂ away from the grid generator 10, one would observe a first grid 20. If one were to observe the same projection of intersecting lines at a distance R₃, which is greater than the first distance R₂ in the x-z plane, one would observe a second grid 30, which appears relatively larger than the first grid 20.

The first grid 20 at a distance R₂ away from the grid generator 10 is spatially bound in the horizontal direction by a first vertical line 22 and a second vertical line 24. There exists a set of vertical lines spatially and temporally generated in between the first vertical line 22 and the second vertical line 24. The first grid 20 at a distance R₂ away from the grid generator 10 is spatially bound in the vertical direction by a first horizontal line 26 and a second horizontal line 28. There exists a set of horizontal lines spatially and temporally generated in between the first horizontal line 26 and the second horizontal line 28. The distance R₂ can be any distance between the grid 20 and the grid generator 10.

The second grid 30 at a distance R₃ away from the grid generator 10 is for all practical purposes the same as the first grid 20, but at further distance from the grid generator 10 than the first grid 20. The grid 30 is spatially bound in the horizontal direction by a first vertical line 32 of the second grid 30 and a second vertical line 34 of the second grid 30. There exists a set of vertical lines spatially and temporally generated in between the first vertical line 32 of the second grid and the second vertical line 34 of the second grid. The second grid 30 at a distance R₃ away from the grid generator 10 is spatially bound in the vertical direction by a first horizontal line 36 of the second grid 30 and a second horizontal line 38 of the second grid 30. There exists a set of horizontal lines spatially and temporally generated in between the first horizontal line 36 of the second grid and the second horizontal line 38 of the second grid.

The similarity of the grids 20 and 30 becomes apparent in the case of projected grid lines, where the grid 30 is formed by the same lines forming the grid 20, except that the grid 30 is observed at a further distance from grid generator 10, making the grid 30 appear larger than the grid 20. In this sense, the grid 30 is the appearance of the grid lines generated by the grid generator at the distance R₃ whereas the grid 20 is the appearance of the grid lines at the distance R₂.

The grids 20 and 30 can be of any number of lines. As illustrated, they include ten vertical lines by ten horizontal lines. A grid including a greater number of intersecting lines can result in improved detection for a FOR 14 and distance from the detector module 16 than a grid including a fewer number of intersecting lines. The grids 20 and 30 are depicted as a square shape, but this is not a requirement. The grid can be any shape including rectangular, oval, or circular. Furthermore, the intersecting lines of the grids 20 and 30 are depicted as orthogonal; however, this is not a requirement. The angles between the intersecting lines can be right angles, acute angles, or obtuse angles in different parts of the grid.

The vertical and horizontal lines can be formed in any suitable manner by the grid generator 10. For example, all of the lines can be formed sequentially or all at once. Either one of the vertical lines or horizontal lines can be formed before the other. The grid generator can alternate between vertical and horizontal lines. When the grid generator 10 uses a scanning laser to form the grid, the laser will sequentially form all of one of the vertical and horizontal lines, followed by the sequential forming of the other of the vertical and horizontal lines. The rate at which the lines are sequentially formed can be so fast that for practical purposes, it is as if all of the grid lines were simultaneously formed. The radiation source for the set of projected lines can be a coherent or incoherent radiation source. For example, when the radiation source is a coherent source, it can be a solid state laser that emits radiation at a wavelength in the near-UV range. Additionally, the radiation frequency and/or intensity can be selected, or attenuated by use of an optical filter, to reduce the risk of eye damage. The grid of intersecting projected lines can be generated by raster scanning the lines or by projecting and scanning an elongated radiation beam. Any suitable methods and apparatus for generating the intersecting lines can be used.

Although, examples shown use Cartesian coordinates, any appropriate coordinate system can be used including polar, cylindrical, or spherical coordinate systems for both grid generation and for grid detection. For example, to form a grid amenable to polar coordinate representation, a series of concentric circles and lines radiating out from the center of those circles can be projected by the grid generator into space.

Grid data can be included, embedded, or otherwise encoded at one or more locations of the grid. By grid data, it is meant that the structure or characteristic of the grid provides data or information that can be read or detected by the detector module 16. In one embodiment, the projected lines including the series of projected intersecting lines are further encoded with different grid data in different regions of the grid to indicate regions within the grid of intersecting lines. One manner of encoding of the grid data is by modulating the beam in the case of a laser being used to form the grid. The modulation is achieved by changing the intensity of the beam and/or blocking the beam with some periodicity. Such a grid data can include a number and the grid lines can include a number, which identifies the grid line to the detector module 16 of the helicopter 18.

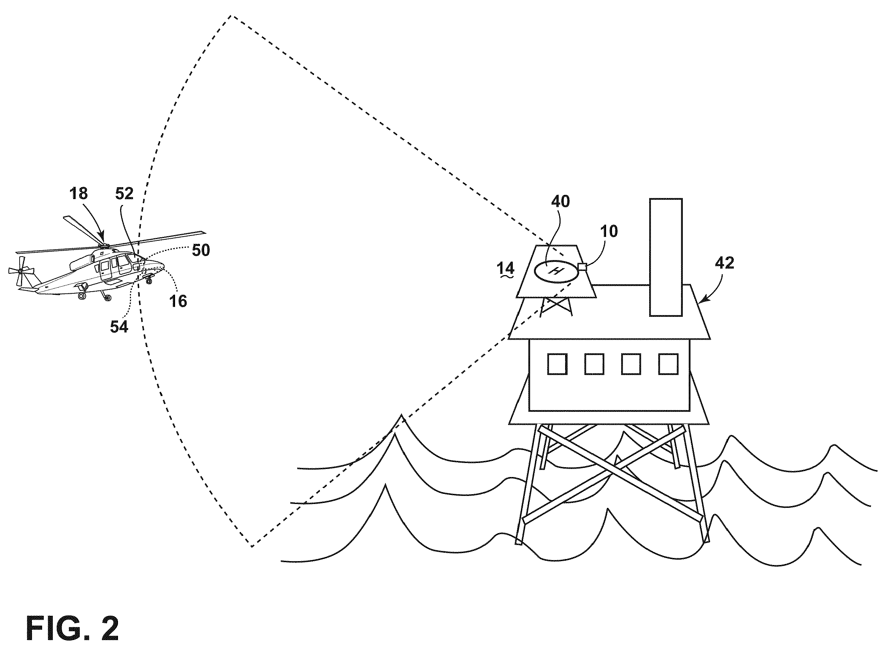

It is contemplated that the grid generator 10 as described above can be located at or near a landing zone 40 and that the landing zone 40 can move, such as, for example, when it is located on an oil platform 42 as illustrated in FIG. 2. As described above, the grid generator 10 can be configured to project into space a set of lines defining a relative navigation grid. Embodiments of the invention include that aircraft-installed detector modules 16 can read the grid data and a processor configured to receive the sensor data will be able to determine precisely what the aircraft's position, velocity, and attitude or pose is in relation to the grid generator 10. Waypoints, guidance to such waypoints, simulated runway lights, approach paths, and other information providing enhanced situational awareness can be defined by the helicopter 18 based on the determined location and predefined waypoint information. In this manner, the grid generator 10 can provide information to an aircraft, such as the helicopter 18, such that it can be utilized in a situational awareness system to aid the helicopter 18 in landing on the moving landing zone. While a helicopter 18 has been illustrated it will be understood that embodiments of the invention can be utilized with any aircraft.

The helicopter 18 includes at least one detector module 16 configured to provide a sensor output related to a location of the detector module 16 within the relative navigation grid produced by the grid generator 10. Likely, the helicopter 18 will include multiple detector modules 16 to increase the continuity, integrity, availability, and accuracy (CIAA) of navigation when the relative navigation system is utilized. It is noted that this CIAA information represents the Actual Navigation Performance (ANP) of the system, which can be continually compared to the required navigation performance (RNP) specified to conduct the landing operation, thus helping ensure safety of the operation. It will be understood that the helicopter 18 can include any number of systems to aid in its operation. By way of non-limiting example, a display 50 has been illustrated as being located within a cockpit 52 of the helicopter 18. The display 50 can be any suitable display including, but not limited to, a heads up display that can be mounted to either the pilot's helmet or part of the flight deck. In the case of remotely piloted vehicles, this information can be broadcast over a data link to the remote operator or pilot so as to facilitate improved situational awareness. Similarly, in the case where the air vehicle is operating autonomously without a pilot, such information can be made available to an onboard autopilot for improved situational awareness. Further, a processor 54 can be included in the helicopter 18 and can be operably coupled to both the detector module(s) 16 and the display 50. The processor 54 can be configured to receive the sensor output from the detector module(s) 16 and can determine a location of the helicopter 18 within the grid based thereon. The processor 54 can also generate situational awareness information, including guidance or deviation information to at least one waypoint for a landing approach, based on the determined location. The processor 54 can be configured to display, on the display 50, the generated situational awareness information.

The helicopter 18 can also include conventional instrument landing systems (ILS), GPS landing systems, and the like, which have not been illustrated for the sake of clarity. Such conventional navigation systems can provide a variety of information including, but are not limited to, speed, heading, altitude, etc. The helicopter 18 can also include a data link 56 (FIG. 1) that can be configured to provide the helicopter 18 with identifier information indicative of a location of the grid generator 10. By way of non-limiting example, such identifier information can include information regarding the identity of the oil platform 42 the helicopter 18 is approaching, as a number of oil platforms can be located closely together.

Helicopter landings on moving platforms including, but not limited to, the oil platform 42, moving ships, and moving vehicles can be difficult because of the lack of guidance cues and other situational awareness aids such as runway approach lighting systems, precision approach path indicators, visual approach slope indicators, etc., that are commonly provided by conventional ILS. Typically, the helicopter approach is flown along a course generally parallel to the oil platform 42 such that the helicopter is never pointed directly at the oil platform because lighting on the platform causes pilot distraction and spatial disorientation leading to further difficulties in orientation, especially in night landings. Helicopter landings on oil platforms, such as the oil platform 42, commonly are conducted to a landing decision point (LDP) located 50 feet above, 50 feet offset to the left or right of, and 50 feet in front of the intended landing point. Transition from an initial approach point (IAP), commonly located 200 feet above and 1/2 to 3/4 miles from the LDP, to the LDP can be difficult when conventional ILS are relied upon, and the remote location in an offshore environment make use of an ILS and runway lighting impractical or impossible. Embodiments of the invention allow for situational awareness information to be generated from the determined location of the helicopter 18 within the FOR 14.

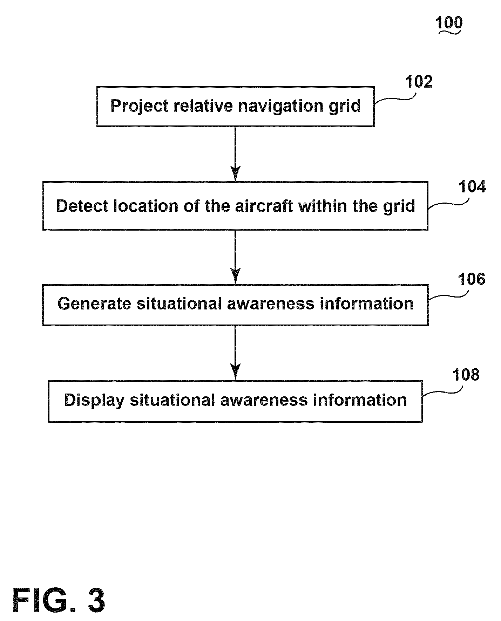

FIG. 3 illustrates a method 100 of providing situational awareness information to aircrew of an aircraft according to one embodiment of the invention. The method 100 begins at 102 by projecting from a grid generator, such as the grid generator 10, a set of lines defining a relative navigation grid, with the lines encoded with grid data configured to identify predetermined points on the relative navigation grid. This can include that the grid generator 10 can repeatedly project the grid into space within the FOR 14.

At 104, the helicopter 18 can detect its location within the grid. As described above, the information that can be read or detected by the detector module 16 can allow the helicopter 18 to determine its location within the grid due to availability of precise relative navigation information computed by the processor 54. The helicopter 18 can determine from the detector module 16 highly accurate position, velocity, and pose angle data or orientation data related to the location of the helicopter 18.

The helicopter 18 can then generate situational awareness information based on its detected location at 106. More specifically, based on this relative navigation information computed by the processor 54, situational awareness information and imagery can be generated for display to the aircrew related to their overall relative navigational situation. For example, the processor 54 can determine the location of the helicopter 18 from the detected grid information and can generate guidance or deviation information to predefined waypoint locations to guide the aircrew to the landing zone 40. The predefined waypoint locations can be defined based on onboard database information or can be a preprogrammed set of waypoints. The processor 54 can display situational awareness information to aid in guiding the aircrew to the waypoint locations.

The situational awareness information can include any suitable information for aiding the aircrew in guiding the helicopter 18. The situational awareness information can include, but is not limited to, position information, speed information, attitude with respect to waypoints, landing sites, situational awareness information depicting an approach path, depicting a final approach fix (FAF) waypoint, depicting a landing descent point (LDP) waypoint, depicting a sea surface or terrain surface, or depicting runway approach lighting. By way of further non-limiting example, the situational awareness information can include guidance to a set of waypoints for a landing approach based on the detected location. The set of way points can include a single waypoint for a landing approach or multiple waypoints can be used for a landing approach based on the detected location. At 108 the helicopter can display, on the display 50, the situational awareness information generated at 106.

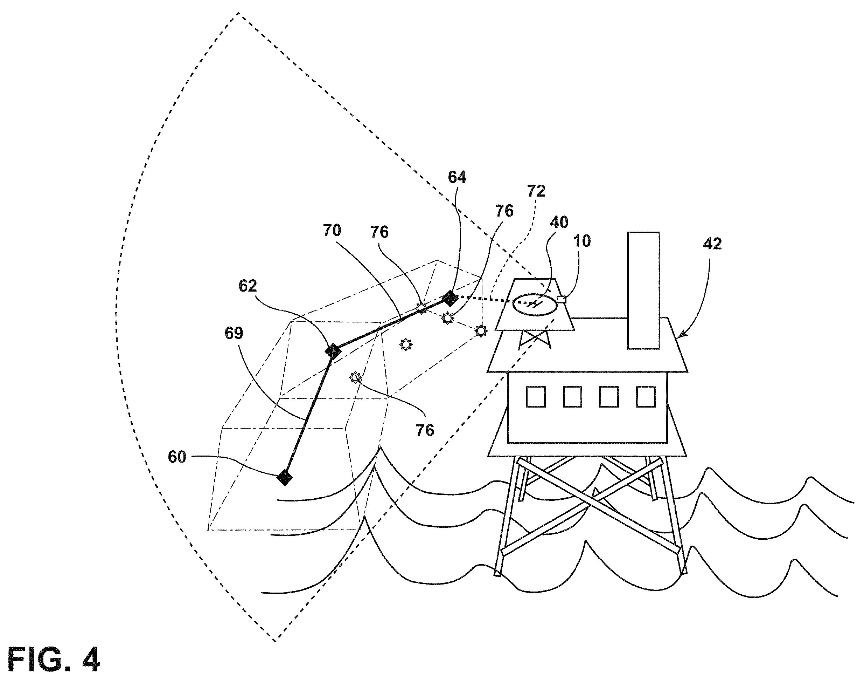

In the example where the situational awareness information includes multiple waypoints for a landing approach, the generated situational awareness information can include that the multiple waypoints are visually linked to visually define a landing approach. For example, FIG. 4 illustrates situational awareness information that can be displayed on the display 50. More specifically, the situational awareness information can include a depiction of the landing zone 40 and oil platform 42 as well as multiple waypoints 60, 62, 64 that are visually linked to define a landing approach. For example, the exemplary displayed situational awareness information includes an IAP waypoint 60, a FAF waypoint 62, and a LDP waypoint 64. The illustrated landing approach includes a first leg 69 generally parallel to the landing zone 40 and a second leg 70 angled towards and leading to the landing zone 40. Such a landing approach allows approach operations to be conducted generally parallel to the oil platform 42 as opposed to directly to the landing zone 40 for purposes of facilitating missed approach operations wherein the helicopter 18 is not to be pointed directly at the landing zone 40, which is designed to preclude collision with the oil platform 42. The LDP waypoint 64, by way of non-limiting examples, can be 30-50 feet from the landing zone 40 and the helicopter 18 can then maneuver a final leg 72 from the LDP waypoint 64 to the landing platform 40.

Additionally, the illustrated helicopter landing approach is never pointed directly at the oil platform 42 because lighting on the oil platform 42 can cause pilot distraction and spatial disorientation. The generally parallel approach path of the illustrated helicopter landing approach facilitates the straight ahead missed approach. Further still, approach lighting 76 and/or additional situational awareness information can be included on the display 50. This can be particularly useful as the situational awareness information displayed can build the feeling of a normal landing when the helicopter 18 is merely flying to a specific point.

It should be noted that the sequence depicted is for illustrative purposes only and is not meant to limit the method 100 in any way. It can be understood that the portions of the method can proceed in a different logical order, additional or intervening portions can be included, or described portions of the method can be divided into multiple portions, or described portions of the method can be omitted without detracting from the described method. The methods described above are for exemplary purposes only and are not meant to limit the inventive embodiments in any way as it is understood that the portions of the method can proceed in a different logical order, additional or intervening portions can be included, or described portions of the method can be divided into multiple portions, or described portions of the method can be omitted without detracting from the described method. For example, initially the helicopter 18 can navigate towards the IAP via conventional means of navigation such as GPS. During this time, the helicopter 18 can determine an actual navigational performance based on information from the detector module(s) 16. More specifically, a quality of the relative navigation system can be determined based on the information from the detector module(s) 16. For example, the processor 54 can determine if the accuracy provided by the detector module(s) 16 or the actual navigational performance satisfies a required navigational performance threshold. The helicopter 18 can be configured to switch from conventional means of navigation such as GPS to displaying the situational awareness information when a required navigational performance threshold is satisfied.

By way of further example, the method 100 can include that the grid generator 10 can be configured to determine a change in a reference frame of the grid generator relative to a prior grid projection and based on the determined change can be configured to alter the grid data of the subsequent grid projection such that the subsequent grid projection appears stabilized relative to the prior grid projection. It is contemplated that the grid generator 10 can include a set of inertial sensors, which can by way of non-limiting examples include gyroscopes and accelerometers (not shown) for measuring angular and linear motion. As the oil platform 42 moves the grid generator 10 moves, the reference frame 80 defined by the grid generator 10 moves, and the repeated grid projections produced by the grid generator 10 also move. As a complete grid can be projected multiple times a second, the grid, as detected by the detector module 16 can appear to jump around or jitter, making it difficult for the helicopter 18 to follow the grid. In the instance where situational awareness information is generated based on the grid information, this can lead to continuously changing navigational solutions because the position of the helicopter 18 with respect to the grid generator 10 would appear to be changing. In this manner, landing the helicopter 18 can be problematic as the helicopter 18 can be trying to constantly align itself with the moving grid projection as the oil platform 42 and the grid generator 10 move.

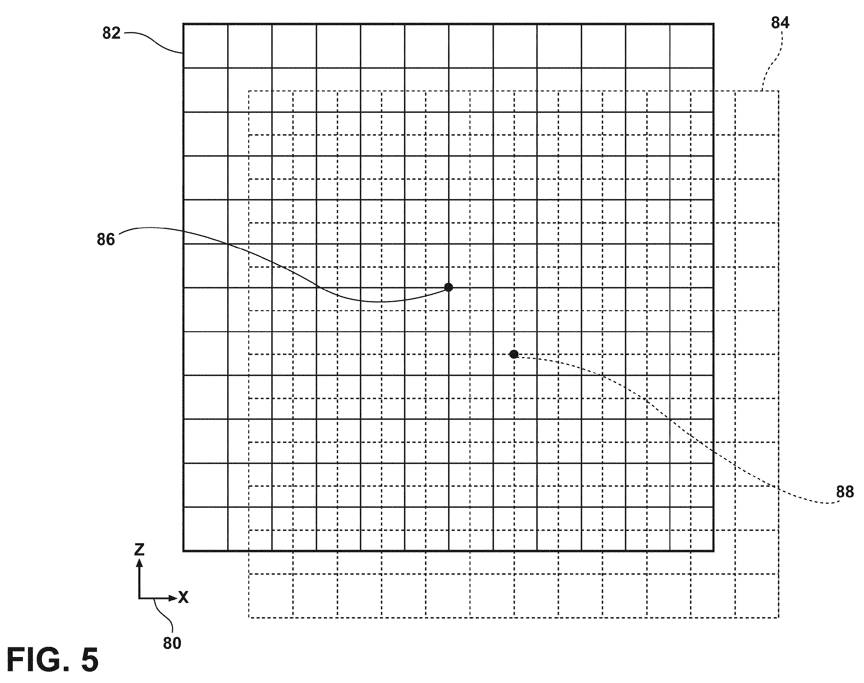

By way non-limiting example, FIG. 5 illustrates a prior grid projection 82 and a subsequent grid projection 84 which can result from movement of the grid generator 10 when it is forming repeated grid projections. The subsequent grid projection 84 has a change in both pitch and yaw from the prior grid projection 82. It will be understood that the grid could move in any given direction, including rotation through pitch, yaw, and roll. For example, the oil platform 42 can roll causing a shift in both the horizontal and vertical lines of a subsequent grid projection. Alternatively, the oil platform 42 can move such that it moves in only a single direction.

For example, in FIG. 5, the lines can be encoded with data that labels the vertical lines and horizontal lines and/or labels one or more points on the grid. It will be understood that all of the lines that are projected need not be encoded with data. For purposes of this description it can be understood that predetermined points on the prior grid projection 82 and the subsequent grid projection 84 can be encoded. Such predetermined points can thus be identified. Such predetermined points can be considered reference points about which the grid projections can be stabilized. By way of non-limiting example, a center 86 of the prior grid projection 82 and a center 88 of the subsequent grid projection 84 have been illustrated as predetermined reference points.

Between the prior grid projection 82 and the subsequent grid projection 84, an embodiment of the stabilization method includes determining a change in a reference frame 80 of the grid generator 10 relative to the prior grid projection 82. Looking at the approach from the simple two-dimensional approach of FIG. 5, a spatial change in the location of the reference frame 80 defined by the grid generator 10 is determined. Such a spatial change is determined between the reference frame 80 when the prior grid projection 82 was projected and the reference frame 80 when the subsequent grid projection 84 was projected. Based on the determined spatial change, the grid data of the subsequent grid projection 84 is altered such that the subsequent grid projection 84 appears spatially stabilized relative to the prior grid projection 82. That is, the grid data of the subsequent grid projection 84 is modified such that the grid appears stabilized in space to the detector module 16 of the helicopter 18.

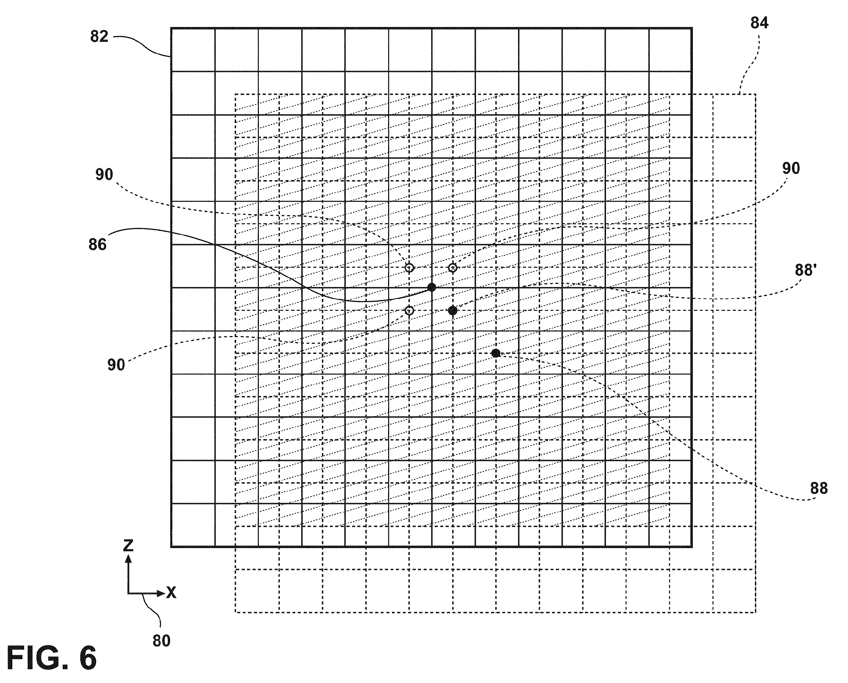

To accomplish the stabilization in the two dimensional example of FIG. 5, the grid data of the subsequent grid projection 84 can be altered such that the encoded data indicates that the data is the same as the spatially closest grid point of the prior grid projection 82. In the illustrated example, the grid data of the subsequent grid projection 84 can be altered to indicate that the center of the grid 48 is actually spatially located where the center 86 is or as close to it as possible. For example, FIG. 6 shows that the center of the subsequent grid projection 84 can be encoded at 88' instead of at the point 88 because 88' is the closest point on the subsequent grid projection 84 to the center 86 of the prior grid projection 82. It should be noted that the center of the subsequent grid projection 84 can be encoded at any of the alternative points 90 because the points 90 are all equidistant with 88' to the center 86 of the prior grid projection 82. It is also contemplated that any other grid data encoded on the subsequent grid projection 84 can be altered to correspond to such a change. It is also contemplated that only the portion of the subsequent grid projection 84, which is within that of the prior grid projection 82 as illustrated by the cross-hatching can be encoded. Because the grid data has been altered, the grid that is visually provided to the aircrew will appear not to have moved as much as the grid has actually moved.

It is contemplated that the method of stabilizing the grid projection can include three-dimensional movement of the grid generator, which can be represented, by way of non-limiting example, determining angular changes in roll, pitch, and yaw of the reference frame 80. In that case, altering the grid data can include converting the angular changes of roll, pitch, and yaw into grid line adjustments for the grid data of the subsequent grid projection. Alternatively, in the case where the grid includes a reference point as described above, determining a change in the reference frame 80 of the grid generator 10 relative to the prior grid projection can include determining a change in the reference frame 80 relative to the reference point. A vector-based determination can be used to determine the change in the reference frame 80 of the grid generator 10 relative to the prior grid projection and methods for stabilizing a projected grid with a vector-based determination are described in the disclosure of US 8,872,081, issued October 28, 2014, entitled Methods for Adjusting a Relative Navigation System, which is incorporated by reference herein.

The above-described embodiments provide a number of benefits including, but not limited to, providing situational awareness information to aircrew, which can be used for flight operations including crews conducting hazardous approach, landing, and departure operations such as night landing in bad weather on offshore oil platforms. The above-described embodiments enable a synthetic vision or HUD system to provide visual feedback such as landing zones and course deviations similar to that of conventional landing systems, which puts the pilot in familiar surroundings, leading to enhanced situational awareness. The above-described embodiments provide the ability to generate synthetic cues such as approach guidance, runway lighting, height above sea surface, etc., which enhance the safety of the operations. In the case of landing the aircraft on an oil platform, the ability to complete the landing operations safely results in significant cost savings to oil and gas producers. Further, stabilizing the projected grid removes undesirable grid motion that would make the projected grid difficult for an aircraft to track.

To the extent not already described, the different features and structures of the various embodiments can be used in combination with each other as desired. That one feature may not be illustrated in all of the embodiments and is not meant to be construed that it may not be, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to disclose the invention, including the best mode, and also to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method of providing situational awareness information to aircrew of an aircraft during landing at a landing zone, the method comprising:
   projecting into space, from a grid generator at the landing zone, a set of lines defining a relative navigation grid and encoded with grid data configured to identify predetermined points on the relative navigation grid;
   detecting, with a detector module on the aircraft, a location of the aircraft within the grid;
   generating situational awareness information, including at least one of guidance or deviation information to at least one waypoint for a landing approach, based on the detected location; and
   displaying, on a display of the aircraft, the generated situational awareness information.
2. The method of clause 1, wherein the situational awareness information includes multiple waypoints for a landing approach based on the detected location.
3. The method of any preceding clause, wherein the multiple waypoints are visually linked on the display to visually define a landing approach.
4. The method of any preceding clause, wherein the landing approach has a first leg generally parallel to the landing zone.
5. The method of any preceding clause, wherein the landing approach has a second leg angled towards the landing zone.
6. The method of any preceding clause, further comprising determining when the landing zone is moving by determining a change in a reference frame of the grid generator relative to a prior grid projection.
7. The method of any preceding clause, further comprising altering the grid data of a subsequent grid projection, based on the determined change, such that the subsequent grid projection appears stabilized relative to the prior grid projection.
8. A method of providing situational awareness information, the method comprising:
   projecting into space from a grid generator a set of lines defining a relative navigation grid and encoded with grid data configured to identify predetermined points on the relative navigation grid;
   detecting, with at least one detector module on an aircraft, a location of the aircraft within the grid;
   generating situational awareness information for the aircraft based on the detected location; and
   displaying, on a display of the aircraft, the generated situational awareness information.
9. The method of any preceding clause, further comprising determining an actual navigational performance based on information from multiple detector modules on the aircraft.
10. The method of any preceding clause, wherein the aircraft switches from a conventional navigational means to a relative navigation system when the determined actual navigational performance satisfies a required navigational performance threshold.
11. The method of any preceding clause, wherein the situational awareness information includes situational awareness information depicting an approach path, depicting a final approach fix waypoint, depicting a landing decision point waypoint, depicting a sea surface or terrain surface, or depicting runway approach lighting.
12. The method of any preceding clause, further comprising determining when the grid generator is moving by determining a change in a reference frame of the grid generator relative to a prior grid projection.
13. The method of any preceding clause, further comprising altering the grid data of a subsequent grid projection, based on the determined change, such that the subsequent grid projection appears stabilized relative to the prior grid projection.
14. The method of any preceding clause, wherein the altering of the grid data includes the grid data of the subsequent grid projection indicating that the data is the same as a spatially closest grid point of the prior grid projection.
15. The method of any preceding clause, wherein the determining the change includes determining angular changes in roll, pitch, and yaw of the reference frame, and the altering the grid data includes converting the angular changes of roll, pitch, and yaw into grid line adjustments.
16. A situational awareness system, comprising:
   a grid generator, at a landing zone, configured to project into space a set of lines defining a relative navigation grid and encoded with grid data configured to identify predetermined points on the relative navigation grid;
   at least one detector module configured to generate a sensor output based on a location of the detector module in the relative navigation grid;
   a display located at least one of within a cockpit of an aircraft, or on a remotely located display system; and
   a processor configured to receive the sensor output, determine a location of the aircraft within the grid, generate situational awareness information to at least one waypoint for a landing approach based on the determined location and display, on the display, the generated situational awareness information.
17. The situational awareness system of any preceding clause, further comprising a data link configured to provide the aircraft with identifier information indicative of a location of the grid generator.
18. The situational awareness system of any preceding clause, wherein the aircraft is configured to switch from conventional navigation systems to displaying the situational awareness information when a required navigational performance threshold is satisfied.
19. The situational awareness system of any preceding clause, wherein the landing zone is moving.
20. The situational awareness system of any preceding clause, wherein the grid generator is configured to determine a change in a reference frame of the grid generator relative to a prior grid projection and based on the determined change is configured to alter the grid data of the subsequent grid projection such that the subsequent grid projection appears stabilized relative to the prior grid projection.

## Claims

1. A method (100) of providing situational awareness information to aircrew of an aircraft (18) during landing at a landing zone (40), the method comprising:
projecting (102) into space, from a grid generator (10) at the landing zone, a set of lines defining a relative navigation grid and encoded with grid data configured to identify predetermined points on the relative navigation grid;
detecting (104), with a detector module (16) on the aircraft (18), a location of the aircraft within the grid;
generating (106) situational awareness information, including at least one of guidance or deviation information to at least one waypoint for a landing approach, based on the detected location; and
displaying (108), on a display (50) of the aircraft, the generated situational awareness information.

2. The method (100) of claim 1, wherein the situational awareness information includes multiple waypoints for a landing approach based on the detected location.

3. The method (100) of claim 2, wherein the multiple waypoints are visually linked on the display to visually define a landing approach.

4. The method (100) of claim 3, wherein the landing approach has a first leg generally parallel to the landing zone.

5. The method (100) of claim 4, wherein the landing approach has a second leg angled towards the landing zone (40).

6. The method (100) of any further preceding claim, further comprising determining when the landing zone (40) is moving by determining a change in a reference frame of the grid generator (10) relative to a prior grid projection.

7. The method (100) of claim 6, further comprising altering the grid data of a subsequent grid projection, based on the determined change, such that the subsequent grid projection appears stabilized relative to the prior grid projection.

8. A method (100) of providing situational awareness information, the method comprising:
projecting (102) into space from a grid generator (10) a set of lines defining a relative navigation grid and encoded with grid data configured to identify predetermined points on the relative navigation grid;
detecting (104), with at least one detector module (16) on an aircraft (18), a location of the aircraft within the grid;
generating (106) situational awareness information for the aircraft (18) based on the detected location; and
displaying (108), on a display (50) of the aircraft (18), the generated situational awareness information.

9. The method (100) of claim 8, further comprising determining an actual navigational performance based on information from multiple detector modules on the aircraft (18).

10. The method (100) of claim 9, wherein the aircraft (18) switches from a conventional navigational means to a relative navigation system when the determined actual navigational performance satisfies a required navigational performance threshold.

11. The method (100) of any of claims 8 to 10, wherein the situational awareness information includes situational awareness information depicting an approach path, depicting a final approach fix waypoint, depicting a landing decision point waypoint, depicting a sea surface or terrain surface, or depicting runway approach lighting.

12. A situational awareness system, comprising:
a grid generator (10), at a landing zone (40), configured to project into space a set of lines defining a relative navigation grid and encoded with grid data configured to identify predetermined points on the relative navigation grid;
at least one detector module (16) configured to generate a sensor output based on a location of the detector module in the relative navigation grid;
a display (50) located at least one of within a cockpit (52) of an aircraft (18), or on a remotely located display system; and
a processor (54) configured to receive the sensor output, determine a location of the aircraft within the grid, generate situational awareness information to at least one waypoint for a landing approach based on the determined location and display, on the display, the generated situational awareness information.

13. The situational awareness system of claim 12, further comprising a data link configured to provide the aircraft with identifier information indicative of a location of the grid generator (10).

14. The situational awareness system of either of claim 12 or 13, wherein the aircraft (18) is configured to switch from conventional navigation systems to displaying the situational awareness information when a required navigational performance threshold is satisfied.

15. The situational awareness system of any of claims 12 to 14, wherein the landing zone (40) is moving.
